# EUROPÄISCHE PATENTSCHRIFT

(11) **EP 2 478 255 B1**
(45) Veröffentlichungstag und Bekanntmachung des Hinweises auf die Patenterteilung: **23.04.2014**
(21) Anmeldenummer: 10752329.2
(22) Anmeldetag: 30.08.2010
(51) Int. Cl.: F16F 15/08, F16F 13/10

(54) **FEDER-DÄMPFUNGSELEMENT**
SPRING DAMPING ELEMENT
ÉLÉMENT AMORTISSEUR À RESSORT

(30) Priorität: 15.09.2009 DE 102009044005
(43) Veröffentlichungstag der Anmeldung: 25.07.2012
(73) Patentinhaber: ContiTech Luftfedersysteme GmbH, 30165 Hannover (DE)
(72) Erfinder: GEDENK, Volker, 30966 Hemmingen (DE)
(74) Vertreter: Finger, Karsten
(86) Internationale Anmeldenummer: PCT/EP2010/062613
(87) Internationale Veröffentlichungsnummer: WO 2011/032820

(56) Entgegenhaltungen:
- EP-A1- 1 500 846
- EP-A2- 1 113 187
- US-A- 5 927 698
- US-A1- 2009 020 929

## Beschreibung

Die Erfindung betrifft ein Feder-Dämpfungselement mit unterschiedlichen Federsteifigkeiten in vertikaler und in horizontaler Belastungsrichtung, wobei das Feder-Dämpfungselement in vertikaler Belastungsrichtung die Hauptfederkräfte und in horizontaler Richtung im Wesentlichen Führungskräfte überträgt. Das Feder-Dämpfungselement weist eine zwischen ungefederter und gefederter Masse angeordnete Elastomerfeder auf mit einer in vertikaler Richtung geringeren Federsteifigkeit als im horizontaler Richtung, sowie eine zwischen ungefederter und gefederter Masse angeordnete nur in vertikaler Richtung belastbare Stahlfeder, d.h. eine Stahlfeder mit näherungsweise linearer Federkennlinie für eine weiche Einfederung, die im Wesentlichen und abgesehen von geringen Reststeifigkeiten keine nennenswerte horizontalen Federsteifigkeit oder Führungseigenschaft aufweist.

Ein gattungsgemäßes Feder-Dämpfungselement offenbart die EP 1 500 846 A1 und die US 2009/0020929, deren Gegenstand ein flüssigkeitsgefülltes Lager betrifft, bei welchem eine Gummifeder und eine Stahlfeder in Reihe angeordnet sind. Das Feder-Dämpfungselement ist mit einem aus zwei Dämpfungseinrichtungen bestehenden Dämpfungselement versehen, wobei einerseits ein Ringspalt und andererseits eine Dämpfungsplatte von einem Fluid durchströmt/umströmt wird. Das Lager ist zwar geeignet für die Aufnahme hoher vertikale Federkräfte und weist auch einen Widerstand gegen laterale, also etwa horizontale Stöße auf, erzeugt aber durch die Reihenanordnung eine große Bauhöhe und nutzt die Gummifeder immer als Haupttragfeder und die Stahlfeder nur als Überlastsicherung, so dass immer die temperaturabhängige Federkennlinie der Gummifeder diejenige ist, die das Tragverhalten bestimmt.

Für die Erfindung bestand daher die Aufgabe, ein Feder-Dämpfungselement bereitzustellen, welches in vertikaler Richtung sowohl eine weiche und temperaturunabhängige Federkennlinie für eine komfortable Federung, eine vertikale Dämpfung und gleichzeitig eine horizontal möglichst steife und feste Führung aufweist, welches zudem wenig Bauraum benötigt, verschleißfrei arbeitet und eine lange Lebensdauer aufweist.

Gelöst wird diese Aufgabe durch die Merkmale des Hauptanspruchs. Weitere vorteilhafte Ausbildungen sind in den Unteransprüchen offenbart.

Dabei sind Elastomerfeder und Stahlfeder zwischen ungefederter und gefederter Masse parallel wirkend und konzentrisch so angeordnet, dass eine Feder die andere Feder umschließt. Die Elastomerfeder unterteilt dabei ein mit einem Hydraulikmedium gefülltes Volumen in zwei Arbeitsräume, die über ein mit einem Dämpfungskanal oder Drosselquerschnitt versehenen Trennelement verbunden sind. Zusätzlich sind Elastomerfeder und Arbeitsräume so angeordnet sind, dass Federbewegungen des Feder-Dämpfungselementes in vertikaler Richtung einer hydraulischen Dämpfung unterworfen sind, wobei die Stahlfeder als Schraubenfeder ausgebildet ist und einen topfförmigen Behälter mit Hydraulikmedium umschließt, der mit einer der Massen verbunden ist, wobei die Elastomerfeder als Ringfeder zwischen innerer Behälterwandung und einem zentrisch in den Behälter hineinragenden und mit einem Anschlussteil für die andere Masse verbundenem Zapfen angeordnet ist
und wobei der Zapfen als Trennelement ausgebildet ist und mit einem ein mit einem Dämpfungskanal oder Drosselquerschnitt versehenen ist.

Damit sorgt die Stahlfeder im Sinne der Aufgabenstellung mit ihrer bei vertikaler Belastung weichen Kennlinie für ein komfortables Federungsverhalten. Die Stahlfeder arbeitet zudem unabhängig von der Temperatur.

Die Elastomerfeder ist dabei so gebaut, dass eine sehr weiche vertikale Federkennlinie bereitgestellt wird, während sie in horizontaler Richtung steif ausgebildet ist und eine horizontal Führung sicher ermöglicht.

Die Anordnung der Elastomerfeder in einem mit Hydraulikmedium gefüllten Volumen so, dass zwei Arbeitsräume geschaffen werden, die über ein mit einem Dämpfungskanal oder Drosselquerschnitt versehenen Trennelement verbunden sind, sorgt für die notwendige Dämpfung, die sich frequenzabhängig auf jeden Einsatzfall einstellen lässt.

Eine weitere vorteilhafte Ausbildung besteht darin, dass der Zapfen im Bereich des topfförmigen Behälters mit einer oder mehreren Nuten versehen ist, beispielsweise mit einer schraubenlinienförmigen Nut, die von einer über den Zapfen geschobenen und mit Bohrungen versehenen Hülse so abgedeckt ist, dass sich ein Dämpfungskanal ausbildet. Eine solche Art von Drosselkanal lässt sich leicht herstellen. Natürlich kann jede beliebige Art von Kanalform durch eine Nut und eine aufgeschobene Hülse leicht hergestellt werden, neben einer schraubenförmigen Nut beispielsweise eine oder mehrere in den Zapfen eingefräste Längsnuten, die in Umfangsnuten enden.

Eine weitere vorteilhafte und konstruktiv aufgrund der Baugegebenheiten bei z. B. Fahrwerken geeignete Ausbildung besteht darin, dass der Zapfen mit der gefederten Masse und der topfförmigen Behälter mit der ungefederten Masse verbunden ist.

Eine weitere vorteilhafte Ausbildung besteht darin, dass der topfförmige Behälter mit einem Deckel, insbesondere mit einer flexiblen Manschette abgedeckt ist. Dies vermeidet Verschmutzungen des Hydraulikmediums und erlaubt trotzdem eine einfache Wartung.

Eine weitere vorteilhafte Ausbildung besteht darin, dass die Elastomerfeder eine ringförmig Gummifeder ist, deren Ringdicke am Zapfen größer ist als an der Behälterinnenwandung, also etwa ausgebildet ist wie eine Diskusscheibe mit einer zentralen Bohrung. Damit wird der Zapfen sicher stabilisiert und kann nicht kippen.

Eine weitere vorteilhafte Ausbildung besteht darin, dass die Elastomerfeder eine aus Gummi- und Metallringen bestehende Schichtfeder ist, also aus abwechselnden Ringen aus Gummi und einvulkanisierten Metallringen besteht. Dadurch lässt sich der Steifigkeitsunterschied in vertikaler und horizontaler, d.h. lateraler Richtung genau auf den Anwendungsfall einstellen.

Besonders geeignet ist das erfindungsgemäße Feder-Dämpfungselement für ein Fahrwerk für ein Fahrzeug, hier insbesondere für ein Schienenfahrzeug, bei welchem hohe Lasten abgefedert werden müssen und eine sichere Seitenführung insbesondere bei Kurvenfahrten und engen Schienenradien höchst wichtig ist.

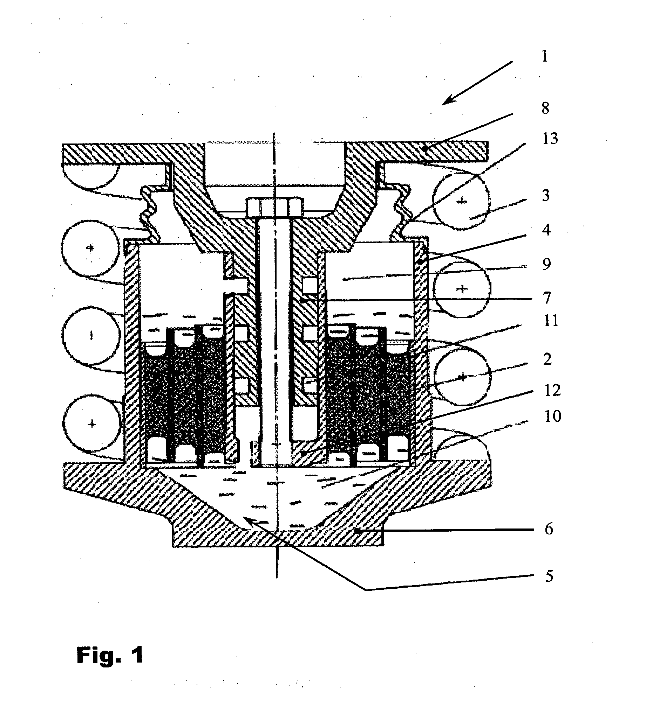

Anhand eines Ausführungsbeispieles soll die Erfindung näher erläutert werden. Die einzige Figur zeigt ein erfindungsgemäßes Feder-Dämpfungselement 1 mit unterschiedlichen Federsteifigkeiten in vertikaler und in horizontaler Belastungsrichtung. Das Feder-Dämpfungselement 1 überträgt in vertikaler Belastungsrichtung die Hauptfederkräfte und in horizontaler Richtung im Wesentlichen Führungskräfte.

Das Feder-Dämpfungselement weist zwei Federn auf, nämlich eine Elastomerfeder 2 und eine Stahlfeder 3. Die Stahlfeder 3 als Schraubenfeder ausgebildet und umschließt einen topfförmigen Behälter 4 mit Hydraulikmedium 5, der auf seiner Unterseite über das Anschlussstück 6 mit einem hier nicht näher dargestellten Radträger als ungefederte Masse eines Schienefahrzeuges verbunden ist. Die Elastomerfeder 2 ist als Ringfeder zwischen der inneren Wandung des Behälters 4 und einem zentrisch in den Behälter 4 hineinragenden Zapfen 7 verbunden, welcher über ein Anschlussteil 8 mit einem hier ebenfalls nicht näher dargestellten Drehgestellrahmen eines Schienenfahrzeuges als gefederte Masse verbunden ist.

Die Elastomerfeder 2 weist in vertikaler Richtung eine viel geringere Federsteifigkeit als in horizontaler Richtung auf, wobei die Federsteifigkeit in vertikaler Richtung in diesem Falle auch weitaus niedriger ist als die Federsteifigkeit der zwischen den beiden Anschlussteilen 6 und 8 eingespannten Stahlfeder 3

Elastomerfeder 2 und Stahlfeder 3 sind somit zwischen ungefederter und gefederter Masse parallel wirkend und konzentrisch so angeordnet sind, dass die Stahlfeder den topfförmigen Behälter 4 und die Elastomerfeder 2 umschließt.

Die Elastomerfeder 2 unterteilt das mit einem Hydraulikmedium gefülltes Volumen des topfförmigen Behälters 4 in zwei Arbeitsräume 9 und 10, die über den - neben der Elastomerfeder - als weiteres Trennelement zwischen diesen Arbeitsräumen ausgebildeten Zapfen 7 mit einem im Zapfen 7 ausgebildeten Dämpfungskanal 11 miteinander verbunden sind. Der Dämpfungskanal 11 stellt einen Drosselquerschnitt dar, über den das Hydraulikmedium 5 ist unter Dissipation zwischen den Arbeitsräumen hin und her strömen kann und somit Dämpfungsarbeit leistet. Elastomerfeder2 und Arbeitsräume 9 und 10 sind also so angeordnet sind, dass Federbewegungen des Feder-Dämpfungselementes in vertikaler Richtung einer hydraulischen Dämpfung unterworfen sind.

Der Dämpfungskanal 11 besteht aus mehreren in der Oberfläche des Zapfens 7 eingebrachten Umfangsnuten, die mit mehreren hier nicht näher dargestellten Längsnuten verbunden sind. Die Nuten sind mit einer über den Zapfen geschobenen und mit Bohrungen versehenen Hülse 12 so abgedeckt ist, dass sich ein zusammenhängender Dämpfungskanal 11 ausbildet.

Der topfförmige Behälter 4 ist mit einer flexiblen Manschette 13 abgedeckt ist.

Die Elastomerfeder 2 ist hier als eine aus Gummi- und Metallringen bestehende Schichtfeder ausgebildet. Die Metallritige und die Gummiringe sind durch Vulkanisation miteinander verbunden.

### Bezugszeichenliste

### (Teil der Beschreibung).

1. Feder-Dämpfungselement
2. Elastomerfeder
3. Stahlfeder
4. Topfförmiger Behälter
5. Hydraulikfluid
6. Anschlussteil
7. Zapfen
8. Anschlussteil
9. Arbeitsraum
10. Arbeitsraum
11. Dämpfungskanal
12. Hülse
13. Manschette

## Patentansprüche

1. Feder-Dämpfungselement (1) mit unterschiedlichen Federsteifigkeiten in vertikaler und in horizontaler Belastungsrichtung, wobei das Feder-Dämpfungselement in vertikaler Belastungsrichtung die Hauptfederkräfte und in horizontaler Richtung im Wesentlichen Führungskräfte überträgt und folgende Einrichtungen aufweist
- eine zwischen ungefederter und gefederter Masse angeordnete Elastomerfeder (2) mit einer in vertikaler Richtung geringeren Federsteifigkeit als in horizontaler Richtung,
- eine zwischen ungefederter und gefederter Masse angeordnete nur in vertikaler Richtung belastete als Schraubenfeder (3) ausgebildete Stahlfeder,
- wobei die Elastomerfeder (2) und Schraubenfeder (3) zwischen ungefederter und gefederter Masse parallel wirkend und konzentrisch so angeordnet sind, dass eine Feder die andere Feder umschließt,
- wobei die Schraubenfeder einen topfförmigen Behälter (4) mit Hydraulikmedium (5) umschließt, der mit einer der Massen verbunden ist, wobei die Elastomerfeder (2) ein mit einem Hydraulikmedium (5) gefülltes Volumen in zwei Arbeitsräume (9, 10) unterteilt, die über ein mit einem Dämpfungskanal (11) oder Drosselquerschnitt versehenen Trennelement verbunden sind,
- wobei Elastomerfeder (2) und die Arbeitsräume (9, 10)so angeordnet sind, dass Federbewegungen des Feder-Dämpfungselementes in vertikaler Richtung einer hydraulischen Dämpfung unterworfen sind.
**dadurch gekennzeichnet, dass**
- die Elastomerfeder (2) als Ringfeder zwischen innerer Behälterwandung und einem zentrisch in den Behälter hineinragenden und mit einem Anschlussteil für die andere Masse verbundenen Zapfen (7) angeordnet ist und
- der Zapfen (7) als Trennelement ausgebildet und mit einem ein mit einem Dämpfungskanal (11) oder Drosselquerschnitt versehenen ist.

2. Feder-Dämpfungselement nach Anspruch 1, bei dem der Zapfen (7) im Bereich des topfförmigen Behälters (4) mit einer oder mehreren Nuten versehen ist, die von einer über den Zapfen geschobenen und mit Bohrungen versehenen Hülse (13) so abgedeckt ist, dass sich ein Dämpfungskanal (11) ausbildet.

3. Feder-Dämpfungselement nach Anspruch 1 oder 2, bei dem der Zapfen (7) mit der gefederten Masse und der topfförmigen Behälter (4) mit der ungefederten Masse verbunden ist, wobei zur Verbindung Anschlussteile (6, 8) vorgesehen sind.

4. Feder-Dämpfungselement nach einem der Ansprüche 1 bis 3, bei dem der topfförmige Behälter (4) mit einem Deckel, insbesondere mit einer flexiblen Manschette (13) abgedeckt ist.

5. Feder-Dämpfungselement nach einem der Ansprüche 1 bis 4, bei dem die Elastomerfeder (2) eine Gummifeder ist.

6. Feder-Dämpfungselement nach einem der Ansprüche 1 bis 5, bei dem die Elastomerfeder (2) eine aus Gummi- und Metallringen bestehende Schichtfeder ist.

7. Fahrwerk für ein Fahrzeug mit einem Feder-Dämpfungselement nach einem der Ansprüche 1 bis 6.

8. Schienenfahrzeug mit einem Feder-Dämpfungselement nach einem der Ansprüche 1 bis 6.

## Claims

1. Spring damping element (1) with different spring rigidities in the vertical and in the horizontal load direction, the spring damping element transmitting the main spring forces in the vertical load direction and essentially transmitting guidance forces in the horizontal direction and having the following devices:
- an elastomeric spring (2) arranged between an unsprung and a sprung mass and having lower spring rigidity in the vertical direction than in the horizontal direction,
- a steel spring which is arranged between an unsprung and a sprung mass and is loaded only in the vertical direction and is designed as a helical spring (3),
- the elastomeric spring (2) and a helical spring (3) being arranged between the unsprung and the sprung mass so as to act in parallel and concentrically such that one spring surrounds the other spring,
- the helical spring surrounding a pot-shaped container (4) having hydraulic medium (5) and being connected to one of the masses, the elastomeric spring (2) subdividing a volume filled with a hydraulic medium (5) into two working spaces (9, 10) which are connected via a separation element provided with a damping duct (11) or throttle cross section,
- the elastomeric spring (2) and the working spaces (9, 10) being arranged such that spring movements of the spring damping element in the vertical direction are subjected to hydraulic damping,
**characterized in that**
- the elastomeric spring (2) is arranged as an annular spring between the inner container wall and a tenon (7) projecting centrically into the container and connected to a connection part for the other mass, and
- the tenon (7) is designed as a separation element and is provided with a damping duct (11) or throttle cross section.

2. Spring damping element according to Claim 1, in which the tenon (7) is provided in the region of the pot-shaped container (4) with one or more grooves covered by a sleeve (13) pushed over the tenon and covered with bores, such that a damping duct (11) is formed.

3. Spring damping element according to Claim 1 or 2, in which the tenon (7) is connected to the sprung mass and the pot-shaped container (4) is connected to the unsprung mass, connection parts (6, 8) being provided for connection.

4. Spring damping element according to one of Claims 1 to 3, in which the pot-shaped container (4) is covered by a cover, in particular by a flexible cuff (13).

5. Spring damping element according to one of Claims 1 to 4, in which the elastomeric spring (2) is a rubber spring.

6. Spring damping element according to one of Claims 1 to 5, in which the elastomeric spring (2) is a layered spring consisting of rubber rings and metal rings.

7. Chassis for a vehicle having a spring damping element according to one of Claims 1 to 6.

8. Rail vehicle having a spring damping element according to one of Claims 1 to 6.

## Revendications

1. Élément d'amortissement à ressort (1) comprenant des rigidités de ressort différentes dans la direction de sollicitation verticale et horizontale, l'élément d'amortissement à ressort transmettant dans la direction de sollicitation verticale les forces de ressort principales et dans la direction horizontale essentiellement les forces de guidage, et présentant les éléments suivants :
- un ressort en élastomère (2) disposé entre une masse non amortie par ressort et une masse amortie par ressort avec une rigidité de ressort plus faible dans la direction verticale que dans la direction horizontale,
- un ressort en acier disposé entre la masse non amortie par ressort et la masse amortie par ressort, réalisé sous forme de ressort à boudin (3) sollicité uniquement dans la direction verticale,
- le ressort en élastomère (2) et le ressort à boudin (3) étant disposés concentriquement et de manière à agir parallèlement entre la masse non amortie par ressort et la masse amortie par ressort, de telle sorte qu'un ressort entoure l'autre ressort,
- le ressort à boudin entourant un récipient (4) en forme de pot avec un fluide hydraulique (5) qui est connecté à l'une des masses, le ressort en élastomère (2) divisant un volume rempli de fluide hydraulique (5) en deux chambres de travail (9, 10) qui sont connectées par le biais d'un élément de séparation pourvu d'un canal d'amortissement (11) ou d'une section transversale d'étranglement,
- le ressort en élastomère (2) et les chambres de travail (9, 10) étant disposés de telle sorte que les mouvements du ressort de l'élément d'amortissement à ressort dans la direction verticale soient soumis à un amortissement hydraulique,
**caractérisé en ce que**
- le ressort en élastomère (2) est disposé sous forme de ressort annulaire entre la paroi interne du récipient et un tourillon (7) pénétrant centralement dans le récipient et connecté à une partie de raccordement pour l'autre masse et
- le tourillon (7) est réalisé sous forme d'élément de séparation et est pourvu d'un canal d'amortissement (11) ou d'une section transversale d'étranglement.

2. Élément d'amortissement à ressort selon la revendication 1, dans lequel le tourillon (7) est pourvu, dans la région du récipient (4) en forme de pot, d'une ou de plusieurs rainures qui sont recouvertes par une douille (13) poussée pardessus le tourillon et pourvue d'alésages, de telle sorte qu'il se forme un canal d'amortissement (11).

3. Élément d'amortissement à ressort selon la revendication 1 ou 2, dans lequel le tourillon (7) est connecté à la masse amortie par ressort et le récipient (4) en forme de pot est connecté à la masse non amortie par ressort, des parties de raccordement (6, 8) étant prévues pour la connexion.

4. Élément d'amortissement à ressort selon l'une quelconque des revendications 1 à 3, dans lequel le récipient (4) en forme de pot est recouvert d'un couvercle, en particulier d'une manchette flexible (13).

5. Élément d'amortissement à ressort selon l'une quelconque des revendications 1 à 4, dans lequel le ressort en élastomère (2) est un ressort en caoutchouc.

6. Élément d'amortissement à ressort selon l'une quelconque des revendications 1 à 5, dans lequel le ressort en élastomère (2) est un ressort multicouches constitué de bagues en caoutchouc et en métal.

7. Châssis pour un véhicule comprenant un élément d'amortissement à ressort selon l'une quelconque des revendications 1 à 6.

8. Véhicule ferroviaire comprenant un élément d'amortissement à ressort selon l'une quelconque des revendications 1 à 6.
